(19) Europäisches Patentamt
European Patent Office
Office européen des brevets

(11) Veröffentlichungsnummer: **0 045 931**
**B1**

(12) **EUROPÄISCHE PATENTSCHRIFT**

(45) Veröffentlichungstag der Patentschrift: **10.10.84**

(51) Int. Cl.³: **C 08 F 14/06,** C 08 F 2/00, C 08 F 2/18

(21) Anmeldenummer: **81106085.4**

(22) Anmeldetag: **04.08.81**

(54) **Kontinuierliches Verfahren und Vorrichtung zur Herstellung eines Vinylchlorid-Polymerisates in wässriger Suspension.**

(30) Priorität: **07.08.80 DE 3029907**

(43) Veröffentlichungstag der Anmeldung: **17.02.82 Patentblatt 82/7**

(45) Bekanntmachung des Hinweises auf die Patenterteilung: **10.10.84 Patentblatt 84/41**

(84) Benannte Vertragsstaaten: **AT BE DE FR GB IT NL**

(56) Entgegenhaltungen: **BE - A - 678 172**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Klippert, Heinz, Dr., Hochfellnstrasse 14, D-8261 Burgkirchen/Alz (DE)**
Erfinder: **Tzschoppe, Eberhard, Hochfellnstrasse 9, D-8261 Burgkirchen/Alz (DE)**
Erfinder: **Paschalis, Stratos, Dr., Berliner Strasse 1, D-5042 Erftstadt-Liplar (DE)**
Erfinder: **Weinlich, Jürgen, Dr., Eichenweg 1, D-6239 Eppstein/Taunus (DE)**
Erfinder: **Engelmann, Manfred, Dr., Baader-Strasse 2a, D-8263 Burghausen/Salzach (DE)**

**EP 0 045 931 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Gegenstand der Erfindung ist ein kontinuierliches Verfahren zur Herstellung eines Vinylchlorid-Polymerisates in wäßriger Suspension gemäß Patentanspruch 1 sowie eine Vorrichtung gemäß Patentanspruch 8.

Vinylchlorid wird bereits seit vielen Jahren im großtechnischen Maßstab in wäßriger Dispersion polymerisiert. Während die Polymerisation in wäßriger Emulsion in Gegenwart von wasserlöslichen Emulgatoren und Aktivatoren bereits von Anbeginn der technischen Entwicklung kontinuierlich durchgeführt wurde und auch heute noch dieses Verfahren weitgehend in der Technik Anwendung findet, wurde für die Polymerisation von Vinylchlorid in wäßriger Suspension in Gegenwart wasserlöslicher Suspendiermittel (Schutzkolloide) sowie öllöslicher Aktivatoren bisher das diskontinuierliche (absatzweise) Polymerisationsverfahren bevorzugt. Durch die laufende Absatzsteigerung des Massenkunststoffs Polyvinylchlorid und seiner Konkurrenz mit anderen Massenkunststoffen, besteht schon seit Jahren die Notwendigkeit, immer billiger produzieren zu müssen und die Möglichkeit in immer größeren Mengen produzieren zu können. Bei einer derartigen Entwicklung bietet sich an, Vinylchlorid auch nach dem Suspensionsverfahren kontinuierlich herzustellen, da ein solches Verfahren in der Regel bessere Raum-Zeit-Ausbeuten ermöglicht als ein diskontinuierliches und der Nachteil eines kontinuierlichen Verfahrens, bei Typumstellung relativ träge zu sein, angesichts der immer größeren Absatzchancen für einen Typ immer weniger ins Gewicht fällt.

Obwohl für die kontinuierliche Emulsionspolymerisation von Vinylchlorid aufgrund der jahrelangen technischen Anwendungen eine ganze Reihe von Verfahren und Verfahrensverbesserungen bekannt sind, lief die technische Entwicklung bei der Suspensionspolymerisation bisher weitgehend in die Richtung, weiterhin absatzweise, jedoch in immer größeren Einheiten, zu produzieren. Dies liegt wohl in erster Linie daran, daß die für die kontinuierliche Emulsionspolymerisation bekannten Techniken auf eine entsprechende kontinuierliche Suspensionspolymerisation nicht ohne weiteres, das heißt nicht mit den dem Fachmann geläufigen Überlegungen zu übertragen sind.

Von den bisherigen Entwicklungen auf dem Gebiet der kontinuierlichen Suspensionspolymerisation von Vinylchlorid ist aus der US-PS 3 007 903 ein Verfahren bekannt, bei dem in einer Vielzahl von hintereinander geschalteten Zonen, vorzugsweise 5 bis 10, polymerisiert wird. Diese Zonen werden dargestellt duch eine entsprechende Anzahl von Rührkesseln, wobei das Reaktionsmedium von einem Kessel in den darunter angeordneten nächsten Kessel überfließt. Die Zonen können auch Abteilungen eines Rohrreaktors sein. Um die Verstopfung der Übergänge von einer Zone in die andere Zone zu vermeiden, wird ein inertes Gas im Gleichstrom mit der Polymerisationsflotte durch die verschiedenen Zonen geführt.

Ferner ist aus DE-AS 1 217 069 eine Vorrichtung zur kontinuierlichen Polymerisation von ethylenisch ungesättigten polymerisierbaren Verbindungen, darunter auch Vinylchlorid, bekannt, die aus einem rotationssymmetrischen Reaktionsraum besteht, der durch rotationssymmetrische Körper in Kammern unterteilt ist, wobei die Kammern miteinander durch kleine Öffnungen verbunden sind, und einen Fluß des Reaktionsgutes nur in der Hauptflußrichtung des Polymerisationsgutes ermöglichen. Im einfachsten Falle sind die rotationssymmetrischen Körper Scheiben, die durch schmale Ringspalte von den Wandungen des Reaktionsraumes getrennt sind. Diese Scheiben sind auf einer rotierenden Antriebswelle befestigt, in Abständen, die den jeweiligen Anforderungen entsprechend gewählt werden. Eine beigefügte Zeichnung zeigt in Flußrichtung des Polymerisationsgutes zunehmende Scheibenabstände, wobei das Verhältnis der Länge zu Durchmesser der durch die Scheiben abgeteilten Kammern etwa 0,1 bis 0,6 beträgt. In der in Strömungsrichtung letzten Kammer ist ein Blattrührer auf der rotierenden Achse angebracht. Die Vorrichtung ist als besonders geeignet für die Emulsionspolymerisation beschrieben, soll jedoch auch für die Polymerisation in wäßriger Suspension anwendbar sein.

Eine weitere Vorrichtung insbesondere für die kontinuierliche Suspensionspolymerisation von Vinylchlorid ist bekannt aus DE-AS 2 343 788. Sie besteht aus einem zentralen, rohrförmigen Reaktionsraum und einer Welle, die senkrecht durch diesen Reaktionsraum geführt ist, wobei der Reaktionsraum durch Trennkörper in Kammern geteilt ist und die Kammern untereinander durch kleine Öffnungen in den Trennkörpern verbunden sind. Diese Kammern tragen Ringrohrleitungen, von denen jeweils eine durch zwei Öffnungen an eine Kammer angeschlossen ist. In allen Kammern können Rührorgane an der durch sie laufenden Welle angebracht sein. Die Körper, die die Kammern im zentralen Reaktionsraum voneinander abtrennen, sind vorteilhaft an den Wänden dieses Reaktionsraumes befestigt und lassen in der Mitte eine Öffnung frei, durch die die Welle, auf der die Rührorgane befestigt sind, läuft. Zweckmäßig sollen 5 bis 30 Stufen (Kammern plus Ringrohrleitung) angewendet werden. Die Zeichnung zeigt eine Vorrichtung mit 9 Kammern, davon 7 mit Ringrohrleitungen. Ein Ausführungsbeispiel beschreibt die Polymerisation von Vinylchlorid in einer Apparatur entsprechend der Zeichnung, die keine Rührorgane an der durchgehenden Welle enthält. Die gesamte Vorrichtung wird im allgemeinen aus Edelstahl hergestellt. Dabei wird darauf geachtet, daß möglichst glatte Innenflächen entstehen, um keine Ansatzpunkte für Ablagerungen zu bilden.

Wie aus der erst- und letztgenannten Veröffentlichung hervorgeht, bilden Wandablagerungen ein Problem bei der kontinuierlichen Suspensionspolymerisation von Vinylchlorid. Beim erstgenannten Verfahren wird versucht, wenigstens die verstopfungsempfindlichsten Stellen, die Überleitungsrohre, vermittels Durchblasen von Gas freizuhalten. Diese Methode ist nicht geeignet, um auch in den Reaktionsräumen weitgehend ohne Wandbeläge zu fahren und die dadurch bedingten Schwierigkeiten, wie Verschlechterung des Wärmeübergangs, Verunreinigung des Polymerisats durch Grobpartikel usw., zu vermeiden. Außerdem kann das Durchblasen von Gas bei Polymerisationsansätzen, die infolge ihres vermehrten Gehaltes an oberflächenaktiven Stoffen zum Schäumen neigen, zu erheblichen Schwierigkeiten führen. Beim zweiten genannten Verfahren wird auf das Problem der Wandbeläge überhaupt nicht eingegangen, sie treten aber mit Sicherheit in den durch die Scheiben abgeteilten Kammern auf und machen eine umständliche Reinigungsoperation erforderlich. Ähnliches gilt für die ohnehin recht aufwendige Apparatur gemäß der dritten beschriebenen Veröffentlichung. Hier sollen zwar durch glatte Innenflächen Ablagerungen vermieden werden und eine Reinigung des Reaktors angeblich nicht notwendig sein, es wird jedoch anschließend gesagt, daß gelegentlich doch etwas Wandbelag entstehen kann, der dadurch beseitigt wird, daß die ganze Apparatur abgestellt und mit Hilfe eines Lösungsmittels, beispielsweise Tetrahydrofuran, gereinigt werden muß. Bei einer großtechnischen Anlage sind hierzu beträchtliche Mengen Lösungsmittel erforderlich, die gesondert gelagert und wieder aufgearbeitet werden müssen, was neben dem ohnehin beträchtlichen Aufwand für die vergleichsweise komplizierte Polymerisationsapparatur auch noch einen zusätzlichen verfahrenstechnischen Aufwand bedeutet.

Für die Verhinderung von Wandbelägen bei der Suspensionspolymerisation von Vinylchlorid sind in letzter Zeit eine ganze Reihe von Verfahren bekannt geworden. Mit diesen sowie generell mit dem Problem der Wandbelagsverhinderung bei der Suspensionspolymerisation von Vinylchlorid beschäftigen sich Kaltwasser, Weber und Thümmler in der Zeitschrift »Plaste und Kautschuk« 26. Jahrgang, Heft 10 1979, Seiten 552 bis 555. Sie stellen fest, daß die Belagsbildung als Funktion des Umsatzes in der Anfangsphase der Polymerisation besonders ausgeprägt ist (loc. cit. Seite 554, linke Spalte, drittletzter Absatz).

Es wurde nun ein Verfahren gefunden, das es ermöglicht, mit guten Raum-Zeit-Ausbeuten Produkte enger Korngrößenverteilung in einer vergleichsweise wenig komplizierten Apparatur herzustellen, die die Mängel der weiter oben beschriebenen Vorrichtungen nicht aufweist und gegebenenfalls leicht gereinigt werden kann. Besonders überraschend war die Feststellung, daß eine wirksame Verhinderung von Wandbelägen nach an sich bekannten Verfahren erreicht werden kann, wenn diese erst nach der Anfangsphase der Polymerisation, das heißt, wenn die Kornmorphologie im wesentlichen bereits eingestellt ist, angewendet werden. Dies hat den Vorteil, daß in der für die Korngestalt kritischen Phase der Polymerisation keine belagsverhindernden Zusatzstoffe eingesetzt werden müssen, die die Einstellung der Korngestalt stören können und/oder die in Gestalt von Wandbeschichtungen den Wärmeübergang von der Polymerisationsflotte auf die Kesselwand verschlechtern und damit die Temperierung der Polymerisationsflotte erschweren. Es wurde ferner gefunden, daß belagsverhindernde Wandbeschichtungen nicht unbedingt bis zum Ende der Polymerisation angewendet werden müssen, so daß auch in der Endphase mit Oberflächen, die einen guten Wärmeübergang ermöglichen, gearbeitet werden kann, was im Hinblick auf die Vermeidung der gegen Ende der Polymerisation auftretenden »Wärmespitze« von Vorteil ist.

Gegenstand der Erfindung ist ein kontinuierliches Verfahren zur Herstellung eines Vinylchlorid-Polymerisates durch Homo-, Co- oder Pfropfpolymerisation von Vinylchlorid, gegebenenfalls in Gegenwart eines oder mehrerer mit Vinylchlorid copolymerisierbarer Monomeren und/oder eines oder mehrerer mit Vinylchlorid pfropfpolymerisierbarer Polymeren, in wäßriger Suspension in Gegenwart eines oder mehrerer radikalisch zerfallender Aktivatoren, oberflächenaktiver Stoffe, weiterer Zusatzstoffe, in mindestens zwei Reaktionszonen, in denen die Polymerisationsmischung so weit in Bewegung gehalten wird, daß sich das gebildete Polymere nicht absetzt, wobei in der ersten Reaktionszone bis zu einem Umsatz von höchstens 10 Gew.-%, bezogen auf eingesetzte Monomere, polymerisiert wird, nach Verlassen der letzten Reaktionszone abgekühlt, entspannt und von nicht umgesetzten Monomeren befreit und nach Abtrennung der Hauptmenge der wäßrigen Flotte zu einem trockenen Polymerpulver verarbeitet wird, das dadurch gekennzeichnet ist, daß die Polymerisation in im wesentlichen zylindrischen Reaktionszonen ausgeführt wird, von denen jede ein Verhältnis der Länge zum Durchmesser von mindestens 4 aufweist, wobei ferner die Polymerisationsmischung in der ersten Reaktionszone bis zu einem Umsatz von 3 bis 10 Gew.-% polymerisiert wird, wobei sie durch einen Mehrstufenrührer mit einer volumenspezifischen Rührleistung von 0,1 bis 5 $kWm^{-3}$ bewegt wird und in der zweiten Reaktionszone ausschließlich mit inerten, glatten, nicht-metallischen Oberflächen in Kontakt ist.

Gegenstand der Erfindung ist ferner eine Vorrichtung zur kontinuierlichen Herstellung von Vinylchlorid-Polymerisaten, bestehend aus mehreren hintereinander geschalteten Reaktoren, von denen zumindest der erste einen Rührer und jeder einen Doppelmantel zur Temperierung des Behälterinhaltes sowie an einem Ende mindestens eine Öffnung zum Zuführen und am gegenüberliegenden Ende mindestens eine Öffnung zum Abführen von Flüssigkeit und gegebenenfalls zwischen den beiden Enden weitere Öffnungen zum Zuführen von Flüssigkeit, ferner an der am höchsten gelegenen Stelle des Reaktors eine Öffnung zum Zu- oder Abführen von Gas und gegebenenfalls weitere Ein- und/oder Anbauten enthält, die dadurch gekennzeichnet ist, daß mindestens zwei Reaktoren verwendet werden, von denen jeder einen zylindrischen Innenraum mit einem Verhältnis von Länge zu Durchmesser von mindestens 4 und der erste Reaktor einen mehrstufigen Rührer aufweist.

Die Größe der Reaktionszonen wird zweckmäßig auf die gewünschte Verweilzeit des Polymerisationsansatzes abgestimmt. Diese ist wiederum abhängig vom Umsatz in der Polymerisationsmischung, bezogen auf polymerisierte Vinylchlorid-Einheiten. Vorzugsweise werden die Reaktionszonen durch voneinander getrennte Gefäße dargestellt, die durch Rohrleitungen miteinander verbunden sind. Es können jedoch auch zwei oder mehr Reaktionszonen, vorzugsweise die in Strömungsrichtung letzten Reaktionszonen, in einem gemeinsamen Gefäß untergebracht sein, in dem die Zonen durch Querschnittsverengungen voneinander abgeteilt sind. Ferner kann auch eine einzelne Reaktionszone im Sinne des oben näher beschriebenen Verfahrens seinerseits aus verschiedenen Gefäßen oder aus einem Gefäß mit Abteilungen aufgebaut sein.

Unabhängig davon, aus wievielen Gefäßen oder Gefäßabteilungen die einzelne Reaktionszone besteht, muß sie von der Polymerisationsmischung in einer Pfropfenströmung durchlaufen werden. Hierunter ist eine Strömung zu verstehen, bei der eine Volumeneinheit in Strömungsrichtung praktisch keine oder nur eine untergeordnete Durchmischung erfährt, während sie senkrecht zur Strömungsrichtung mehr oder weniger intensiv durchmischt werden kann.

Eine Pfropfenströmung wird erzielt, wenn man die Polymerisationsmischung durch rohrförmige Gefäße strömen läßt, die entweder überhaupt keine oder nur solche Einbauten enthalten, die eine Bewegung der Polymerisationsmischung in Strömungsrichtung nicht wesentlich hindern.

Vorzugsweise werden Blattrührer eingesetzt, deren Blätter entweder durchgehend oder in verschiedenen Abständen unterteilt, weitgehend in Strömungsrichtung der Polymerisationsmischung verlaufen und die auf einer Achse angebracht sind, die ebenfalls weitgehend in Strömungsrichtung der Polymerisationsmischung angeordnet ist. Es ist ferner von Bedeutung, daß die Strömungsgeschwindigkeit der Polymerisationsmischung in Abhängigkeit von deren Viskosität beziehungsweise scheinbarer Viskosität nicht zu hoch gewählt wird, so daß Störungen der Pfropfenströmung vermieden werden. Ferner sollten keine Stoffe in die Polymerisationsmischung eingeleitet werden, die darin gasförmig verbleiben oder Gase erzeugen. Ebenso ist ein Sieden der Polymerisationsmischung zu vermeiden. Sofern Flüssigkeiten in die Polymerisationsmischung eingeleitet werden, sollte dies nicht entgegen der Strömungsrichtung der Polymerisationsmischung geschehen.

In den einzelnen Reaktionszonen ist die Polymerisationsmischung soweit in Bewegung zu halten, daß sich keine Polymerpartikel absetzen. Dies kann in günstigen Fällen, beispielsweise bei relativ kleinen Polymerpartikeln, die nicht zum Absetzen neigen, bereits dadurch erreicht werden, daß eine gewisse Strömungsgeschwindigkeit in den Reaktionszonen eingehalten wird. Unter ungünstigeren Bedingungen (große Polymerpartikel, insbesondere solche, die leicht zum Absetzen neigen) wird die Polymerisationsmischung in den Reaktionszonen durch Rührer bewegt. Diese Rührer sind zweckmäßig so ausgebildet, daß sie die angestrebte weitgehende Pfropfenströmung der Polymerisationsmischung nicht oder nur wenig stören. Geeignete Rührer hierfür sind weiter oben beschrieben.

Alle Reaktionszonen sollen im wesentlichen zylindrisch ausgebildet sein und ein Verhältnis ihrer Länge zu ihrem Durchmesser von mindestens 4 aufweisen. Dies gilt, wenn eine einzelne Reaktionszone aus mehreren Gefäßen oder aus mehreren Abteilungen eines Gefäßes besteht, jeweils auch für jedes einzelne Gefäß beziehungsweise jede einzelne Gefäßabteilung. Liegt das Verhältnis der Länge zum Durchmesser der Reaktionszonen unter 4, so läßt sich im allgemeinen keine ausreichend enge Kornverteilung des Polymerisationsproduktes erreichen. Insbesondere bei den aus wirtschaftlichen Gründen angestrebten hohen Raum-Zeit-Ausbeuten treten Schwankungen in der Temperatur der Polymerisationsmischung ein, die wiederum zu Schwankungen der Qualität des erzeugten Produktes führen. Nach oben ist das Verhältnis der Länge zum Durchmesser der Reaktionszonen nur durch konstruktionstechnische Probleme, zusammen mit wirtschaftlichen Überlegungen (steigende Investitionskosten), begrenzt. Im allgemeinen wird dieses Verhältnis 25 bis 30 nicht übersteigen. Vorzugsweise sollte das Verhältnis Länge zu Durchmesser der Reaktionszonen 5 bis 20, insbesondere 5 bis 10, betragen. Dies gilt vor allem für die in Strömungsrichtung der Polymerisationsmischung ersten Reaktionszone, da ihre Ausbildung die Qualität des erzeugten Produktes stärker beeinflußt als die Ausbildung der nachfolgenden Reaktionszonen.

Ein wesentliches Merkmal der Erfindung besteht darin, daß in den Reaktionszonen unterschiedliche Bedingungen eingestellt werden, wobei in den einzelnen Reaktionszonen die Polymerisationsmischung nur bis zum Erreichen ganz bestimmter Umsatzgrade verweilt. Der Umsatz ist hierbei zweckmäßig definiert als die Menge monomeres Vinylchlorid, die in polymerisiertes Vinylchlorid übergegangen ist, bezogen auf die Gesamtmenge des ursprünglich eingesetzten monomeren Vinylchlorids. Dieser Umsatz kann beispielsweise gemessen werden durch wiederholte Probenahme und Analyse der entnommenen Proben auf den Gehalt an monomerem Vinylchlorid und Polyvinylchlorid nach bekannten Verfahren oder durch Messung der von der Polymerisationsmischung abgegebenen Wärmemenge.

Die Polymerisationsmischung darf beim Verlassen der ersten Reaktionszone einen Umsatz von 3 bis 10 Gew.-%, und insbesondere von 5 bis 8 Gew.-% erreicht haben. Werden 3 Gew.-% Umsatz unterschritten, so wird nicht die gewünschte enge Kornverteilung des Polymerisationsproduktes erreicht. Bei mehr als 10 Gew.-% Umsatz treten in der ersten Reaktionszone Schwierigkeiten durch Bildung von Wandbelägen auf, die das Produkt verunreinigen und die Temperierung der Polymerisationsmischung erschweren, so daß häufigeres Abstellen und Reinigen der Anlage erforderlich wird, welches die Raum-Zeit-Ausbeute verschlechtert. Zur Verminderung der Wandbeläge können zwar bekannte Verfahren eingesetzt werden, doch ist hierfür der Zusatz von Stoffen erforderlich, die die Einstellung der gewünschten Korngestalt des Polymeren stören können und/oder in Gestalt von auf der Wand angebrachten Schichten den Wärmeübergang behindern.

Vorzugsweise wird das erfindungsgemäße Verfahren in drei Reaktionszonen durchgeführt. Nach Verlassen der zweiten Reaktionszone soll die Polymerisationsmischung einen Umsatz von 25 bis 50, vorzugsweise von 30 bis 45% aufweisen. Bleibt der Umsatz unter 25%, so treten in der in Strömungsrichtung dritten Reaktionszone die bereits vorstehend erwähnten Schwierigkeiten durch Wandbelagsbildung auf. Ein Umsatz der Polymerisationsmischung beim Verlassen der zweiten Reaktionszone von über 50% ist zwar prinzipiell ohne wesentliche Schädigung der Produktqualität möglich, doch leidet hierunter die Raum-Zeit-Ausbeute und damit die Wirtschaftlichkeit, insbesondere wenn in dieser Zone die Bildung von Wandbelägen durch eine nicht-metallische Wandoberfläche verhindert wird, da der Wärmeübergang von der Polymerisationsmischung auf die Gefäßwand in dieser Zone geringer ist als in der dritten Reaktionszone, in der metallische Wandoberflächen verwendet werden können. Gerade im Umsatzbereich über 50% ist eine gute Wärmeabführung aus der Polymerisationsmischung wichtig, da in diesem Umsatzbereich im allgemeinen die größte Wärmeentwicklung auftritt. Bei schlechterer Wärmeabführung müßte mit entsprechend geringerem Durchsatz gefahren werden.

Beim Verlassen der dritten Reaktionszone soll die Polymerisationsmischung einen Umsatz von 75 bis 95, vorzugsweise von 85 bis 95% aufweisen. Umsätze unter 75% verschlechtern im allgemeinen die Ausbeute und damit die Wirtschaftlichkeit des Verfahrens ohne Vorteile, die diesen Nachteil kompensieren würden. Umsätze über 95% sind im allgemeinen nur schwer und mit erhöhtem Aufwand, unter anderem an Polymerisationszeit, zu erreichen, ohne daß der damit erzielbare Nutzen einer etwas verbesserten Ausbeute den erhöhten Aufwand rechtfertigen würde.

In die erste Reaktionszone werden kontinuierlich eingetragen:

1. monomeres Vinylchlorid und gegebenenfalls weitere Monomere, die mit Vinylchlorid copolymerisierbar sind, sowie gegebenenfalls Polymere, die mit Vinylchlorid pfropfpolymerisierbar sind, wobei diese Polymeren zweckmäßig in Vinylchlorid oder einem anderen Monomeren gelöst oder in Wasser dispergiert angewendet werden. Es können auch ein Monomeres, beispielsweise Vinylchlorid, oder auch mehrere Monomere vor der Einspeisung in den ersten Reaktionsraum in Wasser dispergiert werden;
2. entionisiertes Wasser;
3. Suspendiermittel (Schutzkolloide) sowie gegebenenfalls Emulgatoren, Puffersubstanzen und weitere Polymerisationshilfsstoffe, die zweckmäßig als wäßrige Lösung, gegebenenfalls auch in Wasser mischbaren Lösungsmitteln wie niederen aliphatischen Alkoholen oder Ketonen gelöst angewendet werden;
4. öllösliche beziehungsweise in monomerem Vinychlorid lösliche radikalisch zerfallende Aktivatoren (Initiatoren), die zweckmäßig in Lösung oder fein dispergiert zugesetzt werden. Als Lösungsmittel eignen sich in erster Linie Vinylchlorid und/oder andere Monomere, die mit Vinylchlorid copolymerisierbar sind. Es können auch andere organische Lösungsmittel zur Lösung der Aktivatoren verwendet oder mitverwendet werden. Als Dispersionsmedium kommt in erster Linie Wasser in Frage. In Ausnahmefällen können auch wasserlösliche Aktivatoren in wäßriger Lösung mitverwendet werden.

In der ersten Reaktionszone wird die kontinuierlich eingespeiste Polymerisationsmischung durch einen Mehrstufen-Rührer mit einer volumenspezifischen Rührleistung von 0,1 bis 5, vorzugsweise von 0,2 bis 2 $kWm^{-3}$ bewegt. Als Mehrstufen-Rührer eignen sich beispielsweise Scheibenrührer, die auf einer gemeinsamen Achse in Abständen übereinander mehrere Scheiben tragen, auf denen schaufelförmige Rührorgane angeordnet sind oder die am Rand eine Zahnung aufweisen.

Die durch den Rührer in die Polymerisationsmischung eingebrachte volumenspezifische Rührleistung kann leicht aus der gemessenen Leistungsaufnahme des Rührerantriebs unter Berücksichtigung des ebenfalls gemessenen Volumens der Polymerisationsmischung in der ersten Reaktionszone ermittelt werden. Wird eine Rührleistung von 0,1 $kWm^{-3}$ unterschritten, tritt im allgemeinen eine Verbreiterung der Korngrößenverteilung ein, außerdem wird die mittlere Teilchengröße zu groß und es treten in zunehmendem Maße Grobpartikel auf. Wird die volumenspezifische Rührleistung von 5 $kWm^{-3}$ überschritten, so wird ebenfalls eine Verbreiterung der Korngrößenverteilung festgestellt, außerdem wird die mittlere Teilchengröße des erzeugten Polymerisates im allgemeinen zu klein. Im Bereich einer volumenspezifischen Rührleistung von 0,2 bis 2 $kWm^{-3}$ werden besonders gute Ergebnisse erhalten.

Die in die erste Reaktionszone eingespeisten, oben näher beschriebenen Stoffe und Stoffgemische, insbesondere das Wasser beziehungsweise die wäßrigen Lösungen, können zweckmäßig vor Einspeisung, beispielsweise unter Verwendung von Röhren- oder Plattenwärmeaustauschern vorgewärmt werden.

Die Oberflächen, mit denen die Polymerisationsmischung in der ersten Reaktionszone in Kontakt ist, können sowohl aus einem nicht-metallischen wie auch aus einem metallischen Werkstoff bestehen, der mit der Polymerisationsmischung nicht reagiert beziehungsweise nur geringe Korrosion erleidet und zweckmäßig eine möglichst glatte Oberfläche mit einer Rauhtiefe von weniger als 10 µm, vorzugsweise zwischen 2 und 0,1 µm, aufweist. Vorteilhaft bestehen sie aus metallischem Werkstoff, insbesondere Edelstahl.

Nachdem der weiter oben näher beschriebene Umsatz in der Polymerisationsmischung erreicht ist, wird diese von der ersten in die zweite Reaktionszone überführt. Zweckmäßig werden hierzu natürliche Gefälle und/oder Druckunterschiede in der ersten und zweiten Reaktionszone verwendet.

Sowohl in der zweiten wie auch gegebenenfalls in der dritten und den weiteren Reaktionszonen soll die Polymerisationsmischung so weit bewegt werden, daß sich keine Polymerpartikel absetzen, die Bewegung soll so erfolgen, daß die Pfropfenströmung in diesen Reaktionszonen weitgehend erhalten bleibt. Hierzu sind beispielsweise die Gefäße, die die zweiten und gegebenenfalls weiteren Reaktionszonen beinhalten, mit Blattrührern ausgerüstet.

Die Umdrehungszahl der Rührblätter wird unter Berücksichtigung der scheinbaren Viskosität der Polymerisationsmischung so eingestellt, daß die Pfropfenströmung in der Reaktionszone erhalten bleibt. Im allgemeinen ist dies, je nach Breite der Rührblätter, bei etwa 10 bis etwa 100 Umdrehungen pro Minute der Fall. Es können auch andere Rührer-Typen verwendet werden. Unter gesonders günstigen Umständen, wenn die Polymerpartikel nur geringe Absetzneigung zeigen, ist es möglich, die Polymerisationsmischung, insbesondere in der zweiten Reaktionszone, überhaupt nicht zu rühren.

In der zweiten Reaktionszone soll die Polymerisationsmischung ausschließlich mit nicht-metallischen Oberflächen in Kontakt sein, die inert sind, das heißt mit der Polymerisationsmischung nicht reagieren und von ihr nicht oder nur in geringem Maße korrodiert werden, und außerdem ausreichend abriebfest sein müssen.

Die nicht-metallischen Oberflächen bestehen vorzugsweise aus glasartigen mineralischen Werkstoffen, beispielsweise Glas. Besonders gute Ergebnisse werden erhalten bei Verwendung von Oberflächen aus Emaille.

Vorzugsweise wird noch eine dritte Reaktionszone verwendet, in der die Polymerisationsmischung weitgehend mit glatten, metallischen Oberflächen in Kontakt ist. Diese Oberflächen sollen inert sein, das heißt mit der Polymerisationsmischung nicht reagieren und von dieser nur wenig oder überhaupt nicht korrodiert werden. Geeignete Materialien sind beispielsweise: Nickel, Chrom und Legierungen mit hohem Nickelgehalt, vorzugsweise wird korrosionsfester Edelstahl verwendet. Die Rauhtiefe dieser Oberflächen soll 10 µm nicht übersteigen.

Nach Verlassen der letzten Reaktionszone wird die Polymerisationsmischung nach bekannten Verfahren, beispielsweise in einem Wärmeaustauscher, abgekühlt, entspannt, und von noch vorhandenen nicht-umgesetzten Monomeren weitgehend befreit, das gebildete Polymerisat von der Hauptmenge der wäßrigen Flotte getrennt und getrocknet, wobei gegebenenfalls auch während oder nach der Trocknung noch Maßnahmen zur weiteren Entfernung nicht-umgesetzter Monomeren angewendet werden können.

Vorteilhaft werden der Polymerisationsmischung ein oder mehrere an sich bekannte Mittel zugegeben, die die Bildung von Belägen an den Gefäßwandungen, die die Reaktionszonen umschließen, verhindern oder zumindest verzögern. Insbesondere erfolgt die Zugabe erst, nachdem die Polymerisationsmischung die erste Reaktionszone verlassen hat. Solche Stoffe sind beispielsweise beschrieben in

DE-OS 1 946 474; DE-OS 2 631 325; DE-OS 2 739 708;
DE-OS 2 745 085; DE-OS 2 752 772; DE-OS 2 804 076;
DE-OS 2 807 180; DE-OS 2 811 000; BE-PS 845 012;
US-PS 3 926 910.

Das erfindungsgemäße Verfahren eignet sich zur kontinuierlichen Polymerisation von Vinylchlorid in wäßriger Suspension in Gegenwart von 0 bis 30 Gew.-%, bezogen auf eingesetzte Monomere, mit Vinylchlorid copolymerisierbaren Monomeren, wobei gute Ergebnisse in Gegenwart von 0 bis 15 Gew.-% copolymerisierbarer Monomeren erzielt werden. Insbesondere gute Ergebnisse liefert auch die Homopolymerisation von Vinylchlorid. Das Verfahren kann auch zur Pfropfcopolymerisation von Vinylchlorid verwendet werden, wobei neben Vinylchlorid noch andere copolymerisierbare Monomere zugegen sein können. Es werden hierbei 0,1 bis 15 Gew.-%, vorzugsweise 1 bis 10 Gew.-%, von Polymeren, die mit Vinylchlorid pfropfcopolymerisierbar sind, eingesetzt.

Die erfindungsgemäße Herstellung der Vinylchlorid-Homo-Co- oder -Propfcopolymerisate wird durchgeführt in Gegenwart von 0,001 bis 3 Gew.-%, vorzugsweise 0,01 bis 0,3 Gew.-%, bezogen auf Monomere, radikalbildender Katalysatoren wie zum Beispiel Diaryl-, Diacylperoxide wie Diacetyl-, Acetylbenzoyl-, Dilauroyl-, Dibenzoyl-, Bis-2,4-dichlorbenzoyl-, Bis-2-methylbenzoylperoxid; Dialkylperoxide wie Di-tert.-butylperoxid, Perester wie tert.-Butylpercarbonat; tert.-Butylperacetat, tert.-Butylperoctoat, tert.-Butylperpivalat; Dialkylperoxy-di-carbonate wie Diisopropyl-, Diethylhexyl-, Dicyclohexyl-, Diethylcyclohexylperoxy-dicarbonate; gemischte Anhydride von organischen Sulfopersäuren und organischen Säuren wie Acetylcyclohexylsulfonylperoxid; als Polymerisationskatalysatoren bekannte Azoverbindungen wie Azoisobuttersäurenitril, außerdem gegebenenfalls Zusätzen von Persulfaten wie Kalium-, Natrium- oder Ammoniumpersulfat, Wasserstoffperoxid, tert.-Butylhydroperoxid oder anderen wasserlöslichen Peroxiden sowie Mischungen verschiedener Katalysatoren, wobei peroxidische Katalysatoren auch in Gegenwart von 0,01 bis 1 Gew.-%, bezogen auf Monomere, einer oder mehrerer reduzierender Substanzen, die zum Aufbau eines Redox-Katalysatorsystems geeignet sind, wie zum Beispiel Sulfite, Bisulfite, Dithionite, Thiosulfate, Aldehydsulfoxylate, zum Beispiel Na-Formaldehydsulfoxylat, eingesetzt werden können.

Ferner wird gegebenenfalls in Gegenwart von 0,01 bis 1 Gew.-% vorzugsweise 0,05 bis 0,3 Gew.-%, bezogen auf Monomere, von einem oder mehreren der üblichen Suspendiermittel (Schutzkolloide) wie beispielsweise Polyvinylalkohol, der gegebenenfalls noch bis zu 40 Mol-% Acetylgruppen enthält, Cellulosederivate wie wasserlösliche Methylcellulose, Carboxymethylcellulose, Hydroxyethylcellulose, Methylhydroxypropylcellulose sowie Gelatine, ferner Mischpolymerisate von Maleinsäure beziehungsweise deren Halbestern mit Styrolen, Polyvinylpyrrolidon und Copolymerisate aus Vinylacetat und Vinylpyrrolidon polymerisiert.

Außerdem kann die Polymerisation in Gegenwart von 0,01 bis 1 Gew.-%, bezogen auf Monomere, von einem oder mehreren Emulgatoren durchgeführt werden, wobei die Emulgatoren in Mischung mit den obengenannten Suspendiermitteln eingesetzt werden.

Als Emulgatoren können anionische, amphotere, kationische sowie nicht-ionogene verwendet werden. Als anionische Emulgatoren sind geeignet beispielsweise Alkali-, Erdalkali-, Ammoniumsalze von Fettsäuren wie Laurin-, Palmitin-, oder Stearinsäure, von sauren Fettalkoholschwefelsäureestern, von Paraffinsulfosäuren, von Alkylarylsulfosäuren, wie Dodecylbenzol- oder Dibutylnaphthalinsulfosäure, von Sulfobernsteinsäuredialkylestern, sowie die Alkali- und Ammoniumsalze von epoxygruppenhaltigen Fettsäuren wie Epoxystearinsäure, von Umsetzungsprodukten von Persäuren, zum Beispiel Peressigsäure mit ungesättigten Fettsäuren wie Öl- oder Linolsäure oder ungesättigten Oxyfettsäuren wie Rhizinolsäure.

Als amphotere beziehungsweise kationenaktive Emulgatoren sind beispielsweise geeignet: Alkylbetaine wie Didecylbetain sowie Alkylpyridiniumsalze wie Laurylpyridiniumhydrochlorid, ferner Alkylammoniumsalze wie Oxethyldodecylammoniumchlorid. Als nicht-ionogene Emulgatoren sind beispielsweise geeignet: Teilfettsäureester mehrwertiger Alkohole wie Glycerinmonostearat, Sorbitmonolaurat, -oleat; Polyoxyethylenester von Fettsäuren oder aromatischen Hydroxyverbindungen; sowie Polypropylenoxid-Polyethylenoxid-Kondensationsprodukte.

Neben Katalysatoren, Suspendiermitteln (Schutzkolloiden) und gegebenenfalls Emulgatoren kann die Polymerisation in Gegenwart von Puffersubstanzen, beispielsweise Alkaliacetaten, Borax; Alkaliphosphaten, Alkalicarbonaten, Ammoniak oder Ammoniumsalzen von Carbonsäuren sowie von Molekülgrößenreglern wie beispielsweise aliphatische Aldehyde mit 2 bis 4 Kohlenstoffatomen, Chlor- oder Bromkohlenwasserstoffe wie zum Beispiel Di- und Trichlorethylen, Chloroform, Bromoform, Methylenchlorid sowie Mercaptanen durchgeführt werden.

Beispiele weiterer geeigneter Polymerisationshilfsstoffe finden sich in H. Kainer »Polyvinylchlorid und Vinylchlorid-Mischpolymerisate«, Auflage 1965, Seiten 13 bis 34.

Zur Copolymerisation mit Vinylchlorid sind beispielsweise eines oder mehrere folgender Monomeren geeignet: Olefine wie Ethylen oder Propylen, Vinylester von geradkettigen oder verzweigten Carbonsäuren mit 2 bis 20, vorzugsweise 2 bis 4 Kohlenstoffatomen wie Vinylacetat, -propionat, -butyrat, -2-ethylhexoat, Vinylisotridecansäureester; Vinylhalogenide wie Vinylfluorid, Vinylidenfluorid, Vinylidenchlorid, Vinylether, Vinylpyridin, ungesättigte Säuren wie Malein-, Fumar-, Acryl-, Methacrylsäure und deren Mono- oder Diester mit Mono- oder Dialkoholen mit 1 bis 10 Kohlenstoffatomen; Maleinsäureanhydrid; Maleinsäureimid sowie dessen N-Substitutionsprodukte mit aromatischen cycloaliphatischen sowie gegebenenfalls verzweigten, aliphatischen Substitutionen; Acrylnitril, Styrol.

Zur Pfropfcopolymerisation können beispielsweise vernetzte oder unvernetzte elastomere Polymerisate verwendet werden, die durch Polymerisation von einem oder mehreren folgender Monomeren erhalten wurden; Diene wie Butadien, Cyclopentadien; Olefine wie Ethylen, Propylen; Styrol, ungesättigte Säuren wie Acryl- oder Methacrylsäure sowie deren Ester mit Mono- oder Dialkoholen mit 1 bis 10 Kohlenstoffatomen, Acrylnitril, Vinylverbindungen wie Vinylester von geradkettigen oder verzweigten Carbonsäuren mit 2 bis 20, vorzugsweise 2 bis 4 Kohlenstoffatomen, Vinylhalogenide wie Vinylidenchlorid und Vinylchlorid. Letzteres jedoch nur mit mindestens einem der zuvor genannten Monomeren.

Die Polymerisation wird bei Temperaturen von 30 bis 80, vorzugsweise bei 45 bis 75° C, ausgeführt, wobei gegebenenfalls unter Verwendung von mehr als 2 Rührgeschwindigkeiten und/oder mehreren Temperaturstufen polymerisiert werden kann. Der pH-Wert der Polymerisationsflotte sollte zwischen 2 und etwa 10 liegen.

Während der Polymerisation können ein oder mehrere folgender Stoffe, gegebenenfalls unter Konstanthaltung des Füllvolumens des Polymerisationsgefäßes, zugegeben werden: Wasser, wäßrige Lösungen, Monomere, Katalysatoren, Cokatalysatoren, weitere Polymerisationshilfsstoffe wie zum Beispiel Regler, Puffersubstanzen, Emulgatoren, Suspendiermittel.

Nach dem erfindungsgemäßen Verfahren erhaltene pulverförmige Polymerisate können wie bisher übliche Suspensionspolymerisate des Vinylchlorids, beispielsweise durch Strangpressen, Spritzgießen oder Kalandrieren, thermoplastisch verarbeitet werden.

Gegenstand der Erfindung ist ferner eine Vorrichtung zur kontinuierlichen Herstellung von Vinylchlorid-Polymerisaten, die aus mehreren hintereinander geschalteten Reaktoren besteht. Jeder dieser Reaktoren soll einen Doppelmantel enthalten, der zur Temperierung des Reaktorinhaltes dient und vorzugsweise von einem flüssigen Temperiermedium, beispielsweise Wasser, durchströmt wird. Darüberhinaus können die Reaktoren weitere Mittel zur Temperierung ihres Inhaltes aufweisen, beispielsweise kühlbare Rührer oder sonstige Einbauten.

Jeder Reaktor enthält an einem Ende mindestens eine Öffnung zum Zuführen und am gegenüberliegenden Ende mindestens eine Öffnung zum Abführen von Flüssigkeit. Darüberhinaus können sowohl an den Enden der Reaktoren wie auch zwischen diesen weitere Öffnungen zum Zuführen von Flüssigkeit angebracht sein. Insbesondere der in Strömungsrichtung der Polymerisationsmischung liegende erste Reaktor enthält zweckmäßig an einem Ende mehrere Öffnungen zum Zuführen von Flüssigkeit. Ferner ist an jedem Reaktor in der Nähe der am höchsten liegenden Stelle des Reaktors eine weitere Öffnung zum Zu- oder Abführen von Gasen, beispielsweise Stickstoff oder anderen Inertgasen, angebracht.

Mindestens der in Strömungsrichtung der Polymerisationsmischung erste Reaktor enthält einen Rührer. Vorzugsweise enthält jeder Reaktor einen Rührer, dessen Achse mit der Reaktorachse etwa zusammenfällt. Wie bereits weiter oben erwähnt, sind die Rührer wie auch etwaige weitere Einbauten so ausgebildet, daß sie die in den Reaktoren angestrebte Pfropfenströmung nicht stören. Im Prinzip sind hierzu alle Rührer geeignet, die eine Durchmischung des gerührten Gutes senkrecht zur Rührerachse bewirken, wobei eine Durchmischung in Richtung der Rührerachse weitgehend vermieden wird. Geeignete Rührer sind beispielsweise Blattrührer mit durchgehenden oder unterteilten Blättern, Paddelrührer, Scheibenrührer, die auf einer gemeinsamen Achse in Abständen übereinander Scheiben tragen, auf denen schaufelförmige Rührorgane angeordnet sind oder die am Rand eine Zähnung aufweisen, wie zum Beispiel der »Ekatomizer«® der Firma Ekato/Schopfheim BR-Deutschland. Für den in Strömungsrichtung der Polymerisationsmischung ersten Reaktor wird vorzugsweise ein mehrstufiger Rührer, beispielsweise der soeben beschriebene Scheibenrührer mit mehreren Scheiben übereinander verwendet. Für die weiteren Reaktoren werden vorzugsweise Blattrührer mit durchgehenden oder unterteilten Blättern eingesetzt, insbesondere solche, deren Rührerblätter etwa 20 bis 90% des im Reaktor vorhandenen Raumes durchlaufen ohne dabei die Reaktorwand zu berühren.

Als weitere Einbauten in die Reaktoren kommen beispielsweise Meßfühlerhülsen, gegebenenfalls gekühlte Leitbleche, sowie sogenannte Kühlfinger in Frage.

Die Reaktoren müssen einen zylindrischen Innenraum mit einem Verhältnis von Länge zu Durchmesser von mindestens 4, vorzugsweise 5 bis 20, aufweisen. Ist das Verhältnis kleiner als 4, so wird es mit abnehmender Zahl immer schwieriger, eine Pfropfenströmung in dem Reaktor aufrecht zu erhalten, insbesondere bei erwünschten hohen Raum-Zeit-Ausbeuten. Ist die Verhältniszahl zu hoch, beispielsweise weit über 20, wird die konstruktive Ausführung der Reaktoren schwieriger und kostspielig, außerdem können keine beweglichen Rührer mehr eingesetzt werden, die in ihrer Drehzahl auf die gewünschten Polymerisationsverhältnisse genau eingestellt werden können. Eine erwünschte Rührwirkung senkrecht zur Reaktorachse ist dann nur noch durch feststehende Einbauten möglich, die aber Reinigungsprobleme aufwerfen.

Vorzugsweise besteht die erfindungsgemäße Vorrichtung aus drei Reaktoren, da diese Dreiteilung optimal auf die Eigenheiten der Erfindung: erste Stufe, Einstellung der Kornmorphologie; zweite Stufe, Belagsverhinderung; dritte Stufe, optimale Wärmeableitung, eingestellt ist.

Für die Zwecke der vorliegenden Erfindung besonders geeignet ist eine Vorrichtung, bei der die Volumina der drei hintereinander geschalteten Reaktoren sich verhalten wie 1 : 5 bis 20 : 5 bis 40. Das heißt, wenn der erste Reaktor beispielsweise ein Volumen von 10 Liter aufweist, so sollte der zweite ein solches von 50 bis 200 und der dritte ein solches von 50 bis 400 Liter haben.

Hierdurch können die Verweilzeiten der Polymerisationsmischung in den einzelnen Reaktionen gut im Sinne der Erfindung eingestellt werden.

Bevorzugt ist ferner eine Ausführungsform der erfindungsgemäßen Vorrichtung, bei der der erste Reaktor mit weitgehend senkrechter Achse und die nachfolgenden Reaktoren mit gegen die Waagerechte um 0 bis 20° geneigter Achse angeordnet sind. Zweckmäßig sind die Reaktoren so aufgestellt, daß die Polymerisationsmischung durch natürliches Gefälle von dem einen in den anderen Reaktor gefördert werden kann, gegebenenfalls können jedoch auch Druckunterschiede in den einzelnen Reaktoren zur Förderung der Polymerisationsmischung verwendet werden. Die Überführungsleitungen zwischen den Reaktoren sollte nicht zu lang sein und einen Querschnitt aufweisen, der einen zügigen Weitertransport der Polymerisationsmischung unter Vermeidung der Ausbildung turbulenter Strömungen ermöglicht. Diese Leitungen können Öffnungen zum Zuführen von Flüssigkeit aufweisen.

Zweckmäßig werden die Reaktoren mit Temperatur-, Druck- und Standhöhenmeß- und Regelvorrichtungen ausgerüstet.

Vor dem ersten Reaktor sind die üblichen Vorratsbehälter und Dosiervorrichtungen für die Bestandteile der Reaktionsmischung vorzusehen. Am Ende des letzten Reaktors werden zweckmäßig Gefäße angebracht, die zur Entspannung und Monomerentfernung aus der gebildeten Polymersuspension dienen. Die von Monomeren weitgehend befreite Suspension wird dann in üblichen Apparaten, beispielsweise Zentrifugen in feuchtes Polymeres und wäßrige Flotte getrennt und anschließend das feuchte Polymere in Trockengeräten, wie Stromtrocknern, Wirbelbetttrocknern, von anhaftenden flüchtigen Bestandteilen, insbesondere Wasser und gegebenenfalls noch geringen Beträgen von Monomeren befreit.

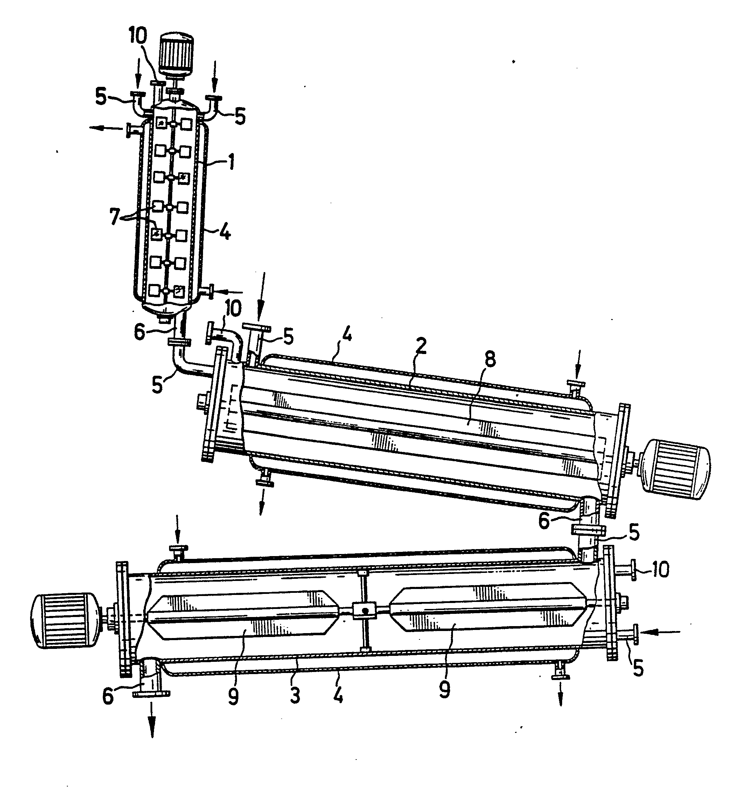

Fig. 1 zeigt ein typisches Beispiel für eine erfindungsgemäße Vorrichtung. Die Erfindung ist jedoch nicht auf dieses Beispiel beschränkt, so können auch zwei oder mehr Reaktoren in anderer Anordnung mit anderen Verhältnissen von Länge zu Durchmesser, mit anderen Rührern, mit Ausnahme des ersten Reaktors gegebenenfalls auch ohne Rührer, verwendet werden.

Die Figur stellt eine schematische Skizze dar, die die Vorrichtung im Längsschnitt zeigt, ohne die bekannten und notwendigen davor oder danach liegenden Einrichtungen zu berücksichtigen. Der Übersichtlichkeit halber wurden auch Meßfühler und gegebenenfalls weitere Einbauten weggelassen.

Die Vorrichtung besteht aus drei Reaktoren 1; 2; 3 mit zylindrischen Innenräumen, von denen der erste und zweite Reaktor ein Verhältnis der Länge zu Durchmesser von 5 : 1, der dritte Reaktor ein solches Verhältnis von 6 : 1 aufweist. Das Verhältnis der Reaktorvolumina beträgt 1 : 8 : 9,6. Jeder Reaktor besitzt einen temperierbaren Doppelmantel 4. An dem einen Ende eines jeden Reaktors sind Öffnungen zum Zuführen von Flüssigkeit 5 angebracht, am jeweils gegenüberliegenden Ende eine Öffnung zur Abführung von Flüssigkeit 6. Der in Strömungsrichtung der Polymerisationsmischung erste Reaktor 1 ist mit senkrechter Achse, die beiden nachfolgenden Reaktoren 2; 3 mit einer um etwa 10° gegen die Waagerechte geneigten Achse übereinander angeordnet, so daß die Polymerisationsmischung die drei Reaktoren vermittels natürlichem Gefälle durchlaufen kann. Der erste Reaktor 1 enthält einen mehrstufigen Scheibenrührer mit Rührschaufeln 7, dessen Rührerachse mit der Behälterachse zusammenfällt. Der zweite und dritte Reaktor 2; 3 enthält je einen Blattrührer 8; 9, dessen Rührerachse wiederum mit der Reaktorachse zusammenfällt. Im dritten Reaktor 3 ist das Rührerblatt 9 unterteilt. Jeder Reaktor 1; 2; 3 trägt in der Nähe seines höchsten Punktes eine Öffnung zum Zu- oder Abführen von Gas 10.

Das Verfahren gemäß der vorliegenden Erfindung ermöglicht es, insbesondere wenn es in einer erfindungsgemäßen Vorrichtung durchgeführt wird, über lange Zeit störungsfrei kontinuierlich mit guten Raum-Zeit-Ausbeuten Suspensionspolymerisate mit einem überwiegenden Gehalt an polymerisierten Vinylchlorid-Einheiten herzustellen, die sich durch eine enge Korngrößenverteilung auszeichnen und auch über längere Produktionszeiten ein konstant gutes Eigenschaftsbild aufweisen. Gegenüber bekannten Verfahren hat das neue Verfahren den Vorteil, in einer relativ einfachen, leicht zu reinigenden Apparatur, durchführbar zu sein.

Nachfolgende Beispiele sollen die Erfindung näher erläutern. Die angegebenen Meßwerte wurden wie folgt ermittelt:

Rührleistung:
: Die gemessene aufgenommene Leistung des Rührwerkmotors unter Last, vermindert um die aufgenommene Leistung ohne Last wird dividiert durch das Volumen der gerührten Polymerisationsmischung.

Maximaler Umsatz:
: Dies ist der Umsatz beim Verlassen des jeweiligen Reaktors, analytisch bestimmt aus der Menge der gebildeten Polymeren, dividiert durch die Menge des ursprünglich eingesetzten Monomeren.

Raum-Zeit-Ausbeute:
: Rechnerisch ermittelt aus der in der angegebenen Gesamtlaufzeit erzeugten Gesamtmenge Polymeres, bezogen auf den zur Polymerisation zur Verfügung stehenden Reaktionsraum. Angegeben in $Mgd^{-1}m^{-3}$.

Belagmenge:
: Nach der angegebenen Laufzeit wurden die Reaktoren mit Tetrahydrofuran behandelt, bis die Beläge offensichtlich weggelöst waren. Aus der so erhaltenen Tetrahydrofuran-Lösung wurde das Lösungsmittel abgedampft und der Rückstand gewogen.

Mittlere Korngröße und mittlere Kornverteilung:
: Die Korngrößenverteilung wird nach DIN 53 734 ermittelt. Die Kornverteilung wird in das Körnungsnetz nach Rosin-Ramler und Sperling eingetragen und daraus die mittlere Korngröße (angegeben in µm) und die Steigung der Kornverteilungskurve (angegeben als Tangens des Steigungswinkels $\alpha$) festgestellt. Je größer dieser Wert, um so enger die Kornverteilung.

K-Wert:
: Gemessen nach DIN 53 726,

Lösungsmittel:
: -Cyclohexanon.

Grobanteil >600 µm:
: Gemessen analog DIN 53 734 mit einem Sieb von 600 µm Maschenweite. Der Siebrückstand in Gewichtsprozent, bezogen auf die Gesamtmenge des gesiebten Materials ist angegeben.

Vergleichsversuch A

Es wird eine Apparatur, bestehend aus drei hintereinander geschalteten Reaktoren verwendet. Jeder Reaktor hat Innenflächen aus poliertem Chromnickelstahl (VA-Stahl) mit einer Rauhtiefe von ca. 2 µm. Der erste Reaktor hat ein Volumen von 10 Liter und ein Verhältnis der Länge (Höhe) zu seinem Durchmesser von 1 : 1. Er ist mit einem Impellerrührer mit polierter Chromnickelstahl-Oberfläche ausgestattet. Der zweite Reaktor hat einen Inhalt von 150 Liter, ein Verhältnis von Länge zu Durchmesser von 5 : 1 und ist mit einem Blattrührer, der eine polierte Chromnickelstahl-Oberfläche besitzt, ausgestattet. Der Rührer durchläuft etwa 70% des gesamten Innenraums des Reaktors. Der dritte Reaktor hat einen Inhalt von 300 Liter, ein Verhältnis seiner Länge zu seinem Durchmesser von 5 : 1 und ist ebenfalls mit einem Blattrührer, der polierte Chromnickelstahl-Oberflächen besitzt, ausgestattet. Dieser Rührer durchläuft etwa 85% des Reaktor-Innenraums. Alle drei Reaktoren besitzen Doppelmäntel, die von Wasser als Temperiermedium durchflossen sind. Außerdem enthalten die Reaktoren Einrichtungen zum Messen der Temperatur der Polymerisationsmischung, des Druckes und der Standhöhe der Flüssigkeit.

Zur Durchführung der kontinuierlichen Vinylchlorid-Polymerisation nach dem Suspensionsverfahren werden die in der nachfolgenden Tabelle unter A angegebenen Mengen an monomerem Vinylchlorid, Wasser, Aktivator und Suspendiermittel, letztere als Lösungen, mit Hilfe von Druckerhöhungspumpen eingespeist. Die in der Tabelle ebenfalls angegebenen Reaktor-Innentemperaturen werden nach Starten der Polymerisation durch entsprechende Kühlwasser-Kreisläufe konstant gehalten. Die Rührer laufen mit folgenden Drehzahlen: 1. Reaktor 600 $min^{-1}$, 2. Reaktor 70 $min^{-1}$, 3. Reaktor 70 $min^{-1}$. Die Rührleistung im ersten Reaktor ist in der Tabelle angegeben.

Nach Verlassen des dritten Reaktors wird die Polymerisationsmischung entspannt, von überschüssigen, nichtumgesetzten Monomeren befreit, in einer Zentrifuge die Hauptmenge der wäßrigen Flotte abgeschieden und das feuchte Polymere bei 70 bis 80° C getrocknet. An dem so gewonnenen Polymeren werden die in der Tabelle angegebenen Meßwerte ermittelt.

Bereits nach 12 Stunden hat sich in den Reaktoren ein erheblicher Belag gebildet. Die Polymerisation wird unterbrochen, die Reaktoren entleert und die Belagsmenge, wie oben näher beschrieben, festgestellt, sie ist in der Tabelle angegeben.

Vergleichsbeispiel B

Es wird eine Apparatur aus drei hintereinander geschalteten Reaktoren verwendet, von denen der erste und dritte Reaktor der gleiche ist wie im Vergleichsversuch A beschrieben. Der zweite Reaktor hat einen Inhalt von 150 Liter, Innenwände aus poliertem Chromnickelstahl (VA-Stahl), ein Verhältnis seiner Länge (Höhe) zu seinem Durchmesser von 1 : 1 und ist mit einem Impellerrührer ausgestattet, dessen Oberflächen ebenfalls aus poliertem Chromnickelstahl bestehen. Es wird verfahren wie in Vergleichsversuch A beschrieben, wobei die in der Tabelle unter B angegebenen Stoffe eingesetzt und die ebenfalls dort verzeichneten Temperaturen eingehalten werden. Die Drehzahl der einzelnen Rührer beträgt: 1. Reaktor 600 $min^{-1}$, 2. Reaktor 170 $min^{-1}$, 3. Reaktor 70 $min^{-1}$. Die Aufarbeitung erfolgt ebenfalls wie beim Vergleichsversuch A.

Nach 20 Stunden muß der Versuch abgebrochen werden, da sich wiederum ein erheblicher Belag gebildet hat. Dieser wird nach Leeren der Reaktoren wie oben beschrieben festgestellt und ist aus nachfolgender Tabelle ersichtlich.

Vergleichsversuch C

Es wird wiederum eine Apparatur, bestehend aus drei hintereinander geschalteten Reaktoren, verwendet. Die ersten beiden Reaktoren sind dieselben, wie unter Vergleichsversuch B beschrieben, an dritter Stelle wird ein Reaktor mit einem Inhalt von 150 Liter eingesetzt, der ein Verhältnis seiner Länge (Höhe) zu seinem Durchmesser von 1 : 1 aufweist, dessen Innenflächen aus poliertem Chromnickelstahl (VA-Stahl) bestehen und der mit einem Impellerrührer ausgestattet ist, dessen Oberflächen ebenfalls aus poliertem Chromnickelstahl bestehen.

Wiederum wird verfahren wie unter Vergleichsversuch A beschrieben, unter Einsatz der aus der Tabelle unter C verzeichneten Stoffe. Das Antibelagsmittel wird in die Leitung zwischen den ersten und den zweiten Reaktor in Form einer wäßrigen Lösung eingespeist. Es werden ferner die in der Tabelle angegebenen Temperaturen eingestellt. Die Drehzahl der Rührer in den einzelnen Reaktoren beträgt: 1. Reaktor 600 $min^{-1}$, 2. Reaktor 170 $min^{-1}$, 3. Reaktor 140 $min^{-1}$. Die Aufarbeitung erfolgt wie unter Vergleichsversuch A angegeben.

Es gelingt nur schwer, konstante Reaktionsbedingungen einzustellen, bereits nach 8 Stunden zeigen die Reaktoren erheblichen Belag. Es wird abgestellt, die Reaktoren entleert und der Belag ermittelt. Er ist in nachfolgender Tabelle angegeben.

Beispiel 1

Es wird eine Apparatur verwendet, die aus drei hintereinander geschalteten Reaktoren, ähnlich der in Fig. 1 gezeigten, besteht. Der erste Reaktor hat einen Inhalt von 10 Liter, ein Verhältnis seiner Länge (Höhe) zu seinem Durchmesser von 10 : 1, seine Innenflächen bestehen aus poliertem Chromnickelstahl (VA-Stahl) mit einer Rauhtiefe von 2 µm, er ist mit einem Scheibenrührer ausgestattet, der auf einer gemeinsamen Achse, die mit der Reaktorachse zusammenfällt, in gleichen Abständen sieben Scheiben übereinander trägt, wobei auf jeder Scheibe in gleichen Abständen sechs schaufelähnliche Rührorgane angeordnet sind. Der Rührer besteht aus poliertem Chromnickelstahl. Der zweite Reaktor besteht aus Kohlenstoffstahl und ist innen emailliert. Er hat einen Inhalt von 150 Liter, ein Verhältnis seiner Länge zu seinem Durchmesser von 5 : 1 und enthält einen emaillierten Blattrührer, der etwa 70% des gesamten Reaktorinnenraums durchläuft. Der dritte Reaktor hat einen Inhalt von 300 Liter, Innenflächen aus poliertem Chromnickelstahl (VA-Stahl)mit einer Rauhtiefe von 2 µm, weist ein Verhältnis seiner Länge zu seinem Durchmesser von 5 : 1 auf und enthält einen Blattrührer mit Oberflächen aus poliertem Chromnickelstahl, der 85% des Reaktorinnenraums durchläuft.

Es wird wiederum verfahren wie in Vergleichsversuch A beschrieben, wobei die in der Tabelle unter 1 angegebenen Stoffe eingesetzt und die verzeichneten Temperaturen eingehalten werden. Die Eingabe der Stoffe in den ersten Reaktor und die Aufarbeitung der Polymerisationsmischung erfolgt wie in Vergleichsversuch A angegeben. In den einzelnen Reaktoren ahben die Rührer folgende Drehzahl: 1. Reaktor 600 $min^{-1}$, 2. Reaktor 70 $min^{-1}$, 3. Reaktor 50 $min^{-1}$. Die Rührleistung im ersten Reaktor ist in der Tabelle angegeben.

Nach 504 Stunden wird die Polymerisation abgebrochen, obwohl sich in den Reaktoren nur geringe Beläge zeigen. Die Reaktoren werden entleert und der Belag, wie weiter oben beschrieben, bestimmt. Er ist in der Tabelle angegeben.

Beispiel 2

Es wird dieselbe Apparatur verwendet wie in Beispiel 1, und auch so verfahren wie dort beschrieben, unter Einsatz der in der Tabelle unter 2 angegebenen Stoffe. Das Antibelagmittel wird als wäßrige Lösung in die Leitung zwischen dem ersten und zweiten Reaktor eingespeist. In den Reaktoren werden folgende Rührerdrehzahlen angewandt: 1. Reaktor 500 $min^{-1}$, 2. Reaktor 70 $min^{-1}$, 3. Reaktor 50 $min^{-1}$.

Nach 650 Stunden Laufzeit wird die Polymerisation abgebrochen, obwohl sich nur ein geringer Belag an den Reaktorwänden zeigt. Die Reaktoren werden entleert und der Belag, wie oben beschrieben, bestimmt. Werte siehe Tabelle.

Beispiel 3

Apparatur und Verfahrensweise wie in Beispiel 2. In den Reaktoren beträgt die Drehzahl der Rührer: 1. Reaktor 700 $min^{-1}$, 2. Reaktor 70 $min^{-1}$, 3. Reaktor 50 $min^{-1}$. Die Rührleistung im ersten Reaktor ist in der Tabelle angegeben.

Nach 780 Stunden wird die Polymerisation unterbrochen und verfahren wie unter Beispiel 1 und 2 beschrieben. Die ermittelte Belagsmenge ist in der Tabelle angegeben.

Beispiel 4

Apparatur und Verfahren wie in Beispiel 2. Rührerdrehzahlen in den Reaktoren wie in Beispiel 1.

Nach 450 Stunden wird die Polymerisation unterbrochen, die Reaktoren werden entleert und der gebildete Belag, wie oben beschrieben, festgestellt. Er ist in der Tabelle angegeben.

In nachfolgender Tabelle sind die Ergebnisse der Vergleichsversuche und Beispiele der Übersichtlichkeit halber zusammengefaßt dargestellt. Die verwendeten Abkürzungen bedeuten:

Suspendiermittel

SMA = teilverseiftes Polyvinylacetat, Verseifungszahl 270, Viskosität einer 4gew.-%igen wäßrigen Lösung bei 20° C, 15 mPa · s;

SMB = teilverseiftes Polyvinylacetat, Verseifungszahl 285, Visklosität einer 4gew.-%igen wäßrigen Lösung bei 20° C, 5 mPa · s;

SMC = Methylhydroxypropylcellulose, Viskosität einer 2gew.-%igen wäßrigen Lösung bei 25° C, 50 mPa · s.

Aktivator

BPND = t-Butylperneodekanoat.
APND = t-Amylperneodekanoat.
PDEH = Di-2-ethylhexyl-peroxydicarbonat.
LPO = Lauroylperoxid.

Comonomeres

VAC = Vinylacetat.

Antibelagmittel

Z1 = Weinsäure,
Z2 = Carboxyethanphosphonsäure,
Z3 = Natriumnitrit.

| Beschreibung | Dim. | Vergleichsversuche A | B | C | Beispiele 1 | 2 | 3 | 4 |
|---|---|---|---|---|---|---|---|---|
| Polymerisations-Mischung | | | | | | | | |
| Vinylchlorid | g/h | 25 000 | 25 000 | 25 000 | 25 000 | 25 000 | 25 000 | 22 500 |
| Comonomer-Art | — | — | — | — | — | — | — | VAC |
| Menge | g/h | — | — | — | — | — | — | 2 500 |
| Wasser | g/h | 45 000 | 45 000 | 45 000 | 45 000 | 45 000 | 45 000 | 45 000 |
| Aktivator-Art | — | BPND | PDEH | BPND | BPND | PDEH | APND | APND/LPO |
| Menge | g/h | 37,5 | 37,5 | 30,0 | 37,5 | 37,5 | 45 | 30/15 |
| Suspendiermittel-Art | — | SMA | SMA | SMA | SMA | SMB | SMC | SMA |
| Menge | g/h | 36 | 36 | 40 | 36 | 45 | 44 | 45 |
| Antibelagmittel-Art | — | — | — | Z1 | — | Z1 | Z2 | Z3 |
| Menge | g/h | — | — | 2,4 | — | 2,4 | 2,4 | 2,4 |
| 1. Reaktor | | | | | | | | |
| Temperatur | °C | 55 | 50 | 66 | 55 | 50 | 66 | 61 |
| Rührleitung | $kWm^{-3}$ | 0,5 | 0,5 | 0,5 | 0,5 | 0,3 | 0,9 | 0,5 |
| maximaler Umsatz | % | 4 | 5 | 4 | 5 | 7 | 5 | 6 |
| 2. Reaktor | | | | | | | | |
| Temperatur | °C | 55 | 50 | 66 | 55 | 50 | 66 | 61 |
| maximaler Umsatz | % | 35 | 33 | 35 | 30 | 30 | 30 | 30 |

Fortsetzung

| Beschreibung | Dim. | Vergleichsversuche A | B | C | Beispiele 1 | 2 | 3 | 4 |
|---|---|---|---|---|---|---|---|---|
| 3. Reaktor | | | | | | | | |
| Temperatur | °C | 55 | 50 | 66 | 55 | 50 | 66 | 61 |
| maximaler Umsatz | % | 79 | 82 | 70 | 90 | 80 | 85 | 80 |
| Verfahrenserfolg | | | | | | | | |
| Laufzeit | h | 12 | 20 | 8 | 504 | 650 | 780 | 450 |
| Raum-Zeit-Ausbeute | $Mgdm^{-1-3}$ | —[1] | —[1] | —[1] | 1,17 | 1,04 | 1,11 | 1,04 |
| Belagmenge | kg | 2,5 | 3,8 | 5,0 | 0,3 | 0,2 | 0,5 | 0,6 |
| Polymer-Qualität | | | | | | | | |
| mittlere Korngröße | µm | 320 | 400 | 300 | 150 | 130 | 150 | 120 |
| mittlere Kornverteilung | tg $\alpha$ | 1,8 | 2,0 | 1,0 | 6,2 | 5,5 | 7,4 | 4,8 |
| K-Wert | — | 70 | 67 | 60 | 70 | 67 | 60 | 60 |
| Grobanteil > 600 µm | Gew.-% | 5 | 10 | 15 | 0,1 | 0,2 | 0,05 | 0,15 |

[1]) Wegen der kurzen Laufzeit ist eine Angabe nicht sinnvoll.

## Patentansprüche

1. Kontinuierliches Verfahren zur Herstellung eines Vinylchloridpolymerisates durch Homo-, Co- oder Pfropfpolymerisation von Vinylchlorid, gegebenenfalls in Gegenwart eines oder mehrerer mit Vinylchlorid copolymerisierbarer Monomerer und/oder eines oder mehrerer mit Vinylchlorid pfropfpolymerisierbarer Polymerer, in wäßriger Suspension in Gegenwart eines oder mehrerer radikalisch zerfallender Aktivatoren, oberflächenaktiver Stoffe und weiterer Zusatzstoffe, in mindestens zwei Reaktionszonen, in denen die Polymerisationsmischung so weit in Bewegung gehalten wird, daß sich das gebildete Polymere nicht absetzt, wobei in der ersten Reaktionszone bis zu einem Umsatz von höchstens 10 Gew.-%, bezogen auf eingesetzte Monomere, polymerisiert wird, nach Verlassen der letzten Reaktionszone abgekühlt, entspannt und von nicht umgesetzten Monomeren befreit und nach Abtrennung der Hauptmenge der wäßrigen Flotte zu einem trockenen Polymerpulver verarbeitet wird, dadurch gekennzeichnet, daß die Polymerisation in im wesentlichen zylindrischen Reaktionszonen ausgeführt wird, von denen jede ein Verhältnis der Länge zum Durchmesser von mindestens 4 aufweist, wobei ferner die Polymerisationsmischung in der ersten Reaktionszone bis zu einem Umsatz von 3 bis 10 Gew.-% polymerisiert wird, wobei sie durch einen Mehrstufenrührer mit einer volumenspezifischen Rührleistung von 0,1 bis 5 $kWm^{-3}$ bewegt wird und in der zweiten Reaktionszone ausschließlich mit inerten, glatten, nicht metallischen Oberflächen in Kontakt ist.

2. Verfahren nach Anspruch 1, dadurch gekennzeichnet, daß die erste Reaktionszone ein Verhältnis von Länge zu Durchmesser von 5 bis 20 aufweist.

3. Verfahren nach einem der Ansprüche 1 oder 2, dadurch gekennzeichnet, daß die Polymerisation in drei Reaktionszonen erfolgt, wobei der Umsatz beim Verlassen der zweiten Reaktionszone 25 bis 50 Gew.-% und beim Verlassen der dritten Reaktionszone 75 bis 95 Gew.-% beträgt.

4. Verfahren nach einem der Ansprüche von 1 bis 3, dadurch gekennzeichnet, daß sich die Reaktionszonen in räumlich voneinander getrennten Reaktoren befinden.

5. Vorrichtung zur kontinuierlichen Herstellung von Vinylchlorid-Polymerisaten, bestehend aus mehreren hintereinander geschalteten Reaktoren (1; 2; 3), von denen zumindest der erste einen Rührer (7) und jeder einen Doppelmantel (4) zur Temperierung des Behälterinhaltes sowie an einem Ende mindestens eine Öffnung zum Zuführen (5) und am gegenüberliegenden Ende mindestens eine Öffnung zum Abführen (6) von Flüssigkeit und gegebenenfalls zwischen den beiden Enden weitere Öffnungen (5) zum Zuführen von Flüssigkeit, ferner an der am höchsten gelegenen Stelle des Reaktors eine Öffnung (10) zum Zu- oder Abführen von Gas und gegebenenfalls weitere Ein- und/oder Anbauten (8; 9) enthält, dadurch gekennzeichnet, daß mindestens zwei Reaktoren (1; 2) verwendet werden, von denen jeder einen zylindrischen Innenraum mit dem Verhältnis von Länge zu Durchmesser von mindestens 4, der erste Reaktor (1) einen mehrstufigen Rührer (7) und der zweite Reaktor glatte nichtmetallische Oberflächen aufweist.

6. Vorrichtung nach Anspruch 5, dadurch gekennzeichnet, daß sie aus drei Reaktoren (1; 2; 3) besteht.

7. Vorrichtung nach Anspruch 6, dadurch gekennzeichnet, daß die Volumina der drei hintereinander geschalteten Reaktoren (1; 2; 3) sich verhalten wie 1 : 5 bis 20 : 5 bis 40.

8. Vorrichtung nach einem der Ansprüche 5 oder 6, dadurch gekennzeichnet, daß der erste Reaktor (1) mit weitgehend senkrechter Achse und die nachfolgenden Reaktoren (2; 3) gegen die Waagerechte mit um 0 bis 20° geneigter Achse angeordnet sind.

## Claims

1. A continuous process for the manufacture of a vinyl chloride polymer by homopolymerisation, copolymerisation or graft polymerisation of vinyl chloride, if appropriate in the presence of one or more monomers which can be copolymerised with vinyl chloride, and/or of one or more polymers which can be graft polymerised with vinyl chloride, in an aqueous suspension, in the presence of one or more activators which decompose to from free radicals, and of surface-active substances and further additives, in at least two reaction zones in which the polymerisation mixture is kept sufficiently in motion for the polymer formed not to settle out, polymerisation being carried out in the first reaction zone up to a conversion of not more than 10% by weight, relative to monomers employed, the mixture being cooled after leaving the last reaction zone, depressurised and freed from unreacted monomers, and, after removing the bulk of the aqueous liquor, processed to give a dry polymer powder, characterised in that the polymerisation is carried out in reaction zones each of them having an essentially cylindrical construction and a length to diameter ratio of at least 4, the polymerisation mixture in the first reaction zone being polymerised up to a conversion of 3 to 10% by weight and being agitated by a multi-stage stirrer at a stirring power per unit volume of 0.1 to 5 $kWm^{-3}$ and in the second reaction zone being exclusively in contact with inert, smooth, non-metallic surfaces.

2. A process as claimed in claim 1, characterised in that the first reaction zone has a length to diameter ratio of 5 to 10.

3. A process as claimed in either of claims 1 or 2, characterised in that the polymerisation is carried out in three reaction zones, the conversion on leaving the second reaction zone being 25 to 50% by weight and on leaving the third reaction zone 75 to 95% by weight.

4. A process as claimed in any of claims 1 to 3, characterised in that the reaction zones are located in reactors which are spatially separated from one another.

5. A device for the continuous manufacture of vinyl chloride polymers, comprising several reactors (1; 2; 3) arranged in tandem, the first of which at least contains a stirrer (7) and each contains a double jacket (4) for controlling the temperature of the contents of the vessel, and also, at one end, at least one aperture for the admission (5) of liquid and, at the opposite end, at least one aperture for the removal (6) of liquid and, if appropriate, further apertures (5) between the two ends for admitting liquid, and also an aperture (10) at the highest point of the reactor for the admission or removal of gas and, if appropriate, further internal fitments and/or attachments (8; 9), characterised in that at least two reactors (1; 2) are used, each of which has a cyclindrical internal space, having a length to diameter ratio of at least 4, the first reactor (1) has a multi-stage stirrer (7) and the second reactor (2) has smooth, non-metallic surfaces.

6. A device as claimed in claim 5, characterised in that it consists of three reactors (1; 2; 3).

7. A device as claimed in claim 6, characterised in that the volumes of the three reactors (1; 2; 3) arranged in tandem are in the ratio of 1 : 5 to 20 : 5 to 40.

8. A device as claimed in either of claims 5 or 6, characterised in that the first reactor (1) is arranged with its axis substantially vertical and the subsequent reactors (2; 3) are arranged with their axes inclined at an angle of 0 to 20° to the horizontal.

**Revendications**

1. Procédé continu pour la préparation d'un polymère de chlorure de vinyle par homopolymérisation, copolymérisation ou polymérisation par greffage de chlorure de vinyle, éventuellement en présence d'un ou plusieurs monomères pouvant être copolymérisés avec le chlorure de vinyle et/ou d'un ou plusieurs polymères pouvant subir une polymérisation par greffage avec du chlorure de vinyle, en suspension aqueuse en présence d'un ou plusieurs activateurs initiateurs radicalaires, de substances tensioactives et d'autres additifs, dans au moins deux zones de réaction, dans lesquelles le mélange de polymérisation est maintenu suffisamment en mouvement pour que le polymère formé ne se dépose pas, la polymérisation étant effectuée dans la première zone de réaction jusqu'à un taux de conversion au plus égal à 10% en poids sur la base des monomères utilisés, le mélange de polymérisation étant, après avoir quitté la première zone de réaction, refroidi, détendu et libéré des monomères non-convertis et, après séparation de la masse principale et du bain aqueux, mis en oeuvre pour donner une poudre polymère sèche, charactérisé en ce que la polymérisation est réalisée dans des zones de réaction essentiellement cylindriques, dont chacune présente un rapport longueur/diamètre au moins égal à 4, le mélange de polymérisation étant en oputre, dans la première zone de réaction, polymérisé jusqu'à un taux de conversion de 3 à 10% en poids, ce mélange étant remué par un agitateur en cascade ayant une puissance d'agitation volumique de 0,1 à 5 $kWm^{-3}$ et n'étant en contact dans la deuxième zone de réaction qu'avec des surfaces inertes, lisses et non-métalliques.

2. Procédé selon la revendication 1, caractérisé en ce que la première zone de réaction présente un rapport longueur/diamètre de 5 à 20.

3. Procédé selon l'une des revendications 1 ou 2, caractérisé en ce que la polymérisation s'effectue dans trois zones de réaction, le taux de conversion étant de 25 à 50% en poids après la sortie de la deuxième zone de réaction et de 75 à 95% en poids à la sortie de la troisième zone de réaction.

4. Procédé selon l'une des revendications 1 à 3, caractérisé en ce que les zones de réaction se trouvent dans des réacteurs spatialement distincts les uns des autres.

5. Dispositif pour la préparation continue de polymères de chlorure de vinyle, constitué de plusieurs réacteurs (1; 2; 3) montés en aval les uns des autres, dont au moins le premier contient un agitateur (7), et chacun d'eux possède une double enveloppe (4) pour assurer la mise en équilibre de la température du contenu des récipients, et aussi, en l'une de leurs extrémités, au moins une ouverture pour l'amenée (5) d'un liquide et, en l'extrémité opposée, au moins une ouverture pour l'évacuation (6) d'un liquide, et éventuellement, entre les deux extrémités, d'autres ouvertures (5) pour l'amenée d'un liquide, et en outre, en le point situé le plus haut dans le réacteur, une ouverture (10) pour l'amenée ou l'évacuation d'un gaz et éventuellement d'autres éléments internes et/ou rapportés à l'extérieur (8; 9) caractérisé en ce que l'on utilise au moins deux réacteurs (1; 2), dont chacun présente un espace intérieur cyclindrique ayant un rapport longueur/diamètre d'au moins 4, le premier réacteur (1) possédant un agitateur en cascade (7) et le deuxième réacteur présentant des surfaces lisses non-métalliques.

6. Dispositif selon la revendication 5, caractérisé en ce qu'il est constitué de trois réacteurs (1; 2; 3).

7. Dispositif selon la revendication 6, caractérisé en ce que les volumes des trois réacteurs (1; 2; 3) montés en aval les uns des autres sont dans le rapport 1 : 5 à 20 : 5 à 40.

8. Dispositif selon l'une des revendications 5 ou 6, caractérisé en ce que le premier réacteur (1) est disposé avec un axe essentiellement vertical, les réacteurs suivants (2; 3) ayant un axe incliné de 0 à 20° par rapport à l'horizontale.

10
5
5
1
7
4
6
10
5
4
2
8
5
6
5
10
5
6
9
3
4
9